(19) **Europäisches Patentamt**

**European Patent Office**

**Office européen des brevets**

(11) **EP 0 606 345 B1**

(12) # EUROPÄISCHE PATENTSCHRIFT

(45) Veröffentlichungstag und Bekanntmachung des Hinweises auf die Patenterteilung:
**05.06.1996 Patentblatt 1996/23**

(21) Anmeldenummer: **92920850.2**

(22) Anmeldetag: **30.09.1992**

(51) Int. Cl.$^6$: **B60L 11/02**

(86) Internationale Anmeldenummer:
**PCT/DE92/00835**

(87) Internationale Veröffentlichungsnummer:
**WO 93/07021 (15.04.1993 Gazette 1993/10)**

(54) **ANTRIEBSANORDNUNG FÜR EIN KRAFTFAHRZEUG**

DRIVE SYSTEM FOR A MOTOR VEHICLE

SYSTEME D'ENTRAINEMENT D'UN VEHICULE A MOTEUR

(84) Benannte Vertragsstaaten:
**DE ES FR GB IT SE**

(30) Priorität: **04.10.1991 DE 4133060**

(43) Veröffentlichungstag der Anmeldung:
**20.07.1994 Patentblatt 1994/29**

(73) Patentinhaber: **FICHTEL & SACHS AG**
**D-97424 Schweinfurt (DE)**

(72) Erfinder:
- **ADLER, Uwe**
  **D-8720 Schweinfurt (DE)**
- **DREXL, Hans-Jürgen**
  **D-8724 Schonungen (DE)**
- **LUTZ, Dieter**
  **D-8720 Schweinfurt (DE)**
- **NAGLER, Franz**
  **D-8729 Ottendorf (DE)**
- **OCHS, Martin**
  **D-8720 Schweinfurt (DE)**
- **SCHIEBOLD, Stefan**
  **D-8720 Schweinfurt (DE)**

- **SCHMIDT-BRÜCKEN, Hans-Joachim**
  **D-8712 Geldersheim (DE)**
- **THIELER, Wolfgang**
  **D-8728 Hassfurt (DE)**
- **WAGNER, Michael**
  **D-8721 Niederwerrn (DE)**
- **WESTENDORF, Holger**
  **D-8721 Hambach (DE)**
- **WYCHNANEK, Rainer**
  **D-8721 Madenhausen (DE)**
- **RÖDER, Manfred**
  **D-8721 Schwebheim (DE)**

(74) Vertreter: **Meissner, Peter E., Dipl.-Ing. et al**
**Meissner & Meissner,**
**Patentanwaltsbüro,**
**Hohenzollerndamm 89**
**D-14199 Berlin (DE)**

(56) Entgegenhaltungen:
CH-C- 345 031    DE-A- 3 725 620
FR-A- 2 592 342

- **PATENT ABSTRACTS OF JAPAN vol. 10, no. 176 (M-491)(2232) 20. Juni 1986 & JP-A-61 026 404**

## Beschreibung

Die Erfindung betrifft eine Antriebsanordnung für ein nicht schienengebundenes Kraftfahrzeug mit jeweils zumindest einem angetriebenen Rad auf beiden Seiten seiner Fahrzeuglängsachse.

Üblicherweise treibt die Brennkraftmaschine eines Kraftfahrzeugs die Räder der Antriebsachse gegebenenfalls auch sämtlicher Antriebsachsen über ein mechanisches Getriebe an. Für den Drehzahlausgleich der Räder jeder Antriebsachse während einer Kurvenfahrt sorgt ein mechanisches Differentialgetriebe. Das Eigenlenkverhalten und die Querdynamik des Kraftfahrzeugs wird in erster Linie durch eine mehr oder weniger aufwendige Konstruktion des Fahrwerks bestimmt.

Aus der gattungsbildenden DE 37 25 620 ist eine Antriebs- und Bremskonzeption für ein Fahrzeug mit einem als Schwingkolbenmotor ausgebildeten Verbrennungsmotor bekannt, der einen elektrischen Generator antreibt, welcher seinerseits über eine von einer elektronischen Steuereinheit gesteuerte Leistungselektronik vier Elektromotore mit elektrischem Strom versorgt.

Die Elektromotore sind jeweils einzeln mit einem der insgesamt vier Antriebsräder des Fahrzeugs gekoppelt. Zur Erhöhung der Fahrsicherheit wird für dieses Fahrzeug, bei dem die Antriebs- und Bremskräfte jedes einzelnen Antriebsrades von der Steuerung individuell einstellbar sind, eine Antiblockierregelung für das Bremsen und eine Antriebsschlupfregelung für den sonstigen Fahrbetrieb vorgeschlagen. In bezug auf Kurvenfahrten wird darin weiterhin vorgeschlagen, das Verhältnis der Antriebsmomente zwischen Vorder- und Hinterrädern bei nicht arbeitender Antriebsschlupfregelung von 60 : 40 auf bis zu 50 : 50 zu verändern. Eine Reaktion der Steuerung auf Lastwechselvorgänge wird ebensowenig erwogen wie eine Berücksichtigung der aktuellen Radlasten im Hinblick auf die Verbesserung der Fahrstabilität.

Weiterhin ist aus der CH 345 031 ein durch eine Oberleitung mit elektrischem Strom versorgter mehrachsiger Omnibus mit elektrischen Fahrmotoren bekannt, wobei jeweils ein Fahrmotor mit den Antriebsrädern einer Achse gekoppelt ist. Bei diesem Fahrzeug erfolgt eine Verteilung der Antriebsleistung auf die einzelnen Antriebsachsen unter Berücksichtigung der aktuellen Radlasten. Eine individuelle Zumessung der Antriebsleistung zu den einzelnen Antriebsrädern wird nicht erwogen und ist auch nicht möglich. Ebensowenig findet eine schnelle Reaktion der Steuerung auf Veränderungen der Radlast statt, da eine bewußte Dämpfung der Meßwerterfassung erfolgt.

Es ist Aufgabe der Erfindung eine Antriebsanordnung für ein für höhere Geschwindigkeiten (mindestens 80 km/h, insbesondere mindestens 150 km/h) geeignetes Kraftfahrzeug zu schaffen, die eine elektrisch steuerbare Beeinflussung des Eigenlenkverhaltens und/oder der Querstabilität des Kraftfahrzeugs ermöglicht. Ein Durchdrehen der Antriebsräder soll dabei möglichst vermieden und eine schnelle Reaktion auf veränderte Bedingungen sichergestellt werden.

Die Erfindung geht von einer Antriebsanordnung für ein Kraftfahrzeug mit jeweils zumindest einem angetriebenen Rad auf beiden Seiten seiner Fahrzeuglängsachse aus und umfaßt allgemein eine Brennkraftmaschine, eine von der Brennkraftmaschine angetriebene elektrische Generatoranordnung, je einen Elektromotor für jedes der angetriebenen Räder und eine die Größe der den einzelnen Elektromotoren aus der Generatoranordnung zugeführten elektrischen Leistung steuernde elektronische Steuerung. Bei einer solchen Antriebsanordnung ist erfindungsgemäß vorgesehen, daß der Steuerung Mittel zugeordnet sind, die die Größe der momentanen Radlast jedes der angetriebenen Räder erfassen, und daß die Steuerung, die jedem Elektromotor zugeführte elektrische Leistung abhängig von der erfaßten momentanen Radlast des von dem Elektromotor angetriebenen Rads steuert. Weitere Merkmale der Erfindung sind Anspruch 1 zu entnehmen.

Ausgangspunkt der Erfindung ist die Überlegung, daß die von einem angetriebenen Rad maximal auf die Fahrbahn übertragbare Radkraft nicht nur von dem momentanen Reibungskoeffizienten zwischen Rad und Fahrbahn abhängt, sondern auch von der von dem Rad auf die Fahrbahn ausgeübten Normalkraft und damit der Last, mit der das Fahrzeug sowohl statisch als auch dynamisch das Rad quer zur Fahrbahn belastet. Je größer die Radlast ist, desto größer ist die von dem Rad längs der Fahrbahn übertragbare resultierende Radkraft. Die resultierende Radkraft setzt sich hierbei aus einer in Umfangsrichtung des Rads gerichteten, durch das Antriebsmoment des Elektromotors und den dynamischen Radradius bestimmten Antriebskraftkomponente und einer senkrecht zur Antriebskraftkomponente gerichteten Seitenführungskraftkomponente zusammen. Solange die resultierende Radkraft kleiner ist als der in erster Näherung durch das Produkt aus Reibungskoeffizient und Radlast nach der Kammschen Regel bestimmte Maximalwert, kommt es weder in Richtung der Antriebskraftkomponente noch in Richtung der Seitenführungskraftkomponente zu Radschlupf. Da erfindungsgemäß die den einzelnen Elektromotoren zugeführte elektrische Leistung abhängig von der Radlast der zugeordneten Räder gesteuert wird, kann die von der Generatoranordnung erzeugte elektrische Leistung entsprechend den momentanen Radkraftübertragungseigenschaften auf die einzelnen Elektromotore verteilt werden. Auf diese Weise läßt sich das Traktionsvermögen insbesondere im Grenzbereich, d.h. bei Annäherung an die maximal übertragbaren Radkräfte optimieren.

Nach Anspruch 1 erhöht die Steuerung zweckmäßigerweise die den einzelnen Elektromotoren zugeführte elektrische Leistung mit zunehmender Radlast des von dem Elektromotor angetriebenen Rads bzw. erniedrigt die elektrische Leistung mit abnehmender Radlast. In einer bevorzugten Ausgestaltung hält die Steuerung hierbei die von der Generatoranordnung an sämtliche Elektromotore insgesamt gelieferte elektrische Leistung auf einem beispielsweise vom Fahrer über ein Fahrpedal vorgegebenen Wert und steuert lediglich die Aufteilung der elektrischen Leistung auf die Elektromotore abhängig von der Radlast der angetriebenen Räder. Auf diese Weise läßt sich bereits vor der Annäherung an Grenzsituationen, bei welchen einzelne der angetriebenen Räder zu schlupfen beginnen die Aufteilung der Antriebsmomente auf die angetriebenen Räder verändern, ohne daß Traktionseinbußen insgesamt hingenommen werden müßten.

Nach Anspruch 1 sind der Steuerung Mittel zugeordnet, die abhängig von der Radlast einen Maximalwert der von jedem angetriebenen Rad übertragbaren resultierenden Radkräfte vorgeben oder ermitteln, wobei in einer bevorzugten Ausgestaltung die Steuerung die jedem Elektromotor zugeführte elektrische Leistung so steuert, daß die in Umfangsrichtung des von dem Elektromotor angetriebenen Rads gerichtete Antriebskraftkomponente der resultierenden Radkraft und/oder die senkrecht zur Antriebskraftkomponente gerichtete Seitenführungskraftkomponente der resultierenden Radkraft kleiner als der Maximalwert ist. Der Maximalwert der resultierenden Radkräfte kann beispielsweise in Form gespeicherter Kennlinienfelder für unterschiedliche Reibungskoeffizienten vorgegeben sein, die beispielsweise abhängig von der Fahrbahnbeschaffenheit (vereist, naß, trocken) ausgewählt werden. Die Maximalwerte der resultierenden Radkräfte können aber auch durch geeignete Meßverfahren, wie sie beispielsweise bei herkömmlichen Antischlupfregelungen oder Antiblockierregelungen eingesetzt werden, bestimmt werden. Bei der vorstehenden Ausgestaltung wird durch Steuerung der dem Elektromotor zugeführten elektrischen Leistung das Antriebsmoment des Elektromotors und damit die in Umfangsrichtung des Rads gerichtete Antriebskraftkomponente der resultierenden Radkraft beeinflußt. Die Steuerung durch Reduktion der Antriebskraftkomponente erfolgt so, daß die resultierende Radkraft und damit auch die Seitenführungskraftkomponente kleiner als der vorstehend erwähnte Maximalwert wird, wodurch sichergestellt wird, daß das Kraftfahrzeug die Seitenführung nicht verliert.

Bei den vorstehenden Ausgestaltungen sorgt die Steuerung wiederum zweckmäßigerweise dafür, daß bei Überschreitung des Maximalwerts der Radkräfte eines der angetriebenen Räder das von dem Elektromotor dieses Rads gelieferte Antriebsmoment gemindert und zugleich das Antriebsmoment des Elektromotors wenigstens eines weiteren Rads, vorteilhafterweise jedoch sämtlicher weiterer Räder erhöht wird, um so trotz Annäherung an die Haftgrenze zunächst die vom Fahrer insgesamt vorgegebene Leistung nicht mindern zu müssen.

Bei den die Radlast erfassenden Mitteln kann es sich um an den Radaufhängungskomponenten der angetriebenen Räder angeordnete Sensoren handeln, die jeweils eine die Radlast repräsentierende Größe, insbesondere die von einer Radfederung oder/und einem Stoßdämpfer übertragene Kraft direkt messen. In ähnlicher Weise können auch beispielsweise bei hydraulischen oder pneumatischen Federungen die Drücke des Federungsmediums direkt gemessen werden.

Aber auch eine indirekte Messung der Radlast durch die Radlasterfassungsmittel ist möglich, wenn Sensoren vorgesehen sind, die jeweils eine von der Radlast abhängige Größe, insbesondere den von der Radlast abhängigen Einfederungsweg nach Größe und/oder zeitlicher Änderung erfassen und hiervon abhängig eine die Radlast repräsentierende Größe errechnen. Die von der Radlast abhängige Größe des Einfederungswegs liefert in Kenntnis der Federungskonstanten der Radfederung die statische Komponente der Radlast, während aus der zeitlichen Änderung und dem Beschleunigungsverhalten Kräfte ermittelt werden können, die von Stoßdämpfern der Radaufhängung dynamisch hervorgerufen werden.

Die Erfindung erlaubt eine Traktionsmaximierung. Eine weitere Ausgestaltung der Erfindung, betrifft das Eigenlenkverhalten des Fahrzeugs während einer Kurvenfahrt. Hierbei liegt die Überlegung zugrunde, daß sich durch unterschiedliche Aufteilung der Elektromotorleistungen und damit der Antriebsmomente auf Räder beiderseits der Fahrzeuglängsachse die Querdynamik des Fahrzeugs und insbesondere das Eigenlenkverhalten bei Kurvenfahrten beeinflussen läßt. Hier ist es deshalb Aufgabe, eine Antriebsanordnung für ein Kraftfahrzeug zu schaffen, dessen Eigenlenkverhalten insbesondere bei Kurvenfahrten auf elektrischem Weg variiert werden kann.

Dies wird bei eines Antriebsanordnung gemäß Anspruch 1 dadurch erreicht, daß der Steuerung zusätzlich Mittel zugeordnet sind, die eine Kurvenfahrt erfassen und daß die Steuerung während der Kurvenfahrt die Aufteilung der den Elektromotoren von auf gegenüberliegenden Seiten der Fahrzeuglängsachse angeordneten Rädern zugeführten elektrischen Leistung zur Erzeugung eines das Eigenlenkverhalten beeinflussenden Giermoments ändert.

Die Steuerung bestimmt die Aufteilung der Elektromotorleistung auf beide Seiten der Fahrzeuglängsachse und damit die Größe des um die Hochachse wirkenden Giermoments. Das Giermoment wird so bemessen, daß sich in weiten Bereichen ein neutrales Fahrverhalten ergibt, welches erst in Grenzbereichen, d.h. vor dem Ausbrechen des Fahrzeugs in ein leicht untersteuerndes Verhalten übergeht. Die Größe des zu erzeugenden Giermoments kann abhängig von der Größe der momentanen Radlasten oder aber abhängig von der momentanen Querbeschleunigung des Fahrzeugs gesteuert werden. Die Erfassung der Radlasten hat den Vorteil, daß die momentane Lastverteilung auf dem Kraftfahrzeug, die sich beispielsweise bei unterschiedlicher Besetzung des Fahrzeugs ändern kann, mitberücksichtigt wird. Die von der Querbeschleunigung des Fahrzeugs abhängige Steuerung des Giermoments trägt der mit wachsender Kurvengeschwindigkeit sich ändernden Querdynamik Rechnung. Aufgrund der durch Querbeschleunigungen des Fahrzeugs hervorgerufenen Wankneigung des Fahrzeugs läßt sich die Querbeschleunigungsabhängigkeit des Giermoments auch durch eine radlastabhängige Steuerung realisieren.

In beiden Varianten steuert die Steuerung die den Elektromotoren zugeführten elektrischen Leistungen zweckmäßigerweise so, daß sie das Antriebsmoment an zumindest einem Rad auf der kurvenäußeren Seite der Fahrzeuglängsachse erhöht und/oder das Antriebsmoment an zumindest einem Rad an der kurveninneren Seite der Fahrzeuglängsachse erniedrigt. Das Vehältnis der Erhöhung kann von der Radlast oder der Querbeschleunigung abhängig sein oder aber einen konstanten, die Fahrwerkgeometrie des Fahrzeugs berücksichtigenden Wert haben. Zweckmäßigerweise wird in diesem Zusammenhang die elektrische Leistung der Elektromotore von gemeinsam einer Antriebsachse zugeordneten Rädern so gesteuert, daß das Verhältnis des Antriebsmoments des kurvenäußeren Rads der Antriebsachse zum Antriebsmoment des kurveninneren Rads dieser Antriebsachse im wesentlichen einen vorgegebenen Wert größer 1 hat. Das zusätzliche Giermoment unterstützt damit die Kurvenwilligkeit. Bei Fahrzeugen mit mehreren Antriebsachsen, beispielsweise Fahrzeugen mit Vierradantrieb kann darüber hinaus die Kurvenwilligkeit dadurch verbessert werden, daß die Steuerung die elektrische Leistung der Elektromotore der vorderen und der hinteren Antriebsachse so steuert, daß das Verhältnis der Summe der Antriebsmomente der hinteren Antriebsachse zur Summe der Antriebsmomente der vorderen Antriebsachse im wesentlich einen vorgegebenen Wert hat. Der vorgegebene Wert liegt in diesem Fall beispielsweise in einem Bereich zwischen 0,5 und 1 bei Fahrzeugen, deren Schwerpunkt um nicht mehr als 1/10 des Achsabstands von der Mittenposition zwischen den Achsen abweicht und in der Längsmittelebene des Fahrzeugs liegt. Bei dieser Art der Aufteilung der Antriebsmomente zwischen vorderer Antriebsachse und hinterer Antriebsachse wird das Antriebsmoment der Vorderachse zu Lasten der Hinterachse erhöht.

In jeder der vorstehenden Varianten wird jedoch unter dem Gesichtspunkt maximaler Traktion während der Kurvenfahrt zweckmäßigerweise dafür gesorgt, daß die Steuerung, die den einzelnen Elektromotoren zugeführte elektrische Leistung so steuert, daß die Summe der Antriebsmomente der Elektromotore sämtlicher angetriebener Räder bei einer Änderung der elektrischen Leistung der einzelenen Elektromotore im wesentlichen konstant bleibt. Die Erniederung des Antriebsmoments eines der Elektromotore bedingt damit die Erhöhung des Antriebsmoments des Elektromotors eines anderen angetriebenen Rads.

Für die von der Querbeschleunigung abhängige Steuerung der Aufteilung der elektrischen Leistung auf die einzelnen Elektromotore und/oder die Steuerung des Verhältnisses der Antriebsmomente der angetriebenen Räder sind der Steuerung zweckmäßigerweise Mittel zugeordnet, die die auf das Kraftfahrzeug wirkende Querbeschleunigung nach Größe und/oder Richtung erfassen. Um die Kurvenwilligkeit mit wachsender Querbeschleunigung zu erhöhen, ist in einer bevorzugten Ausgestaltung vorgesehen, daß die Steuerung das Verhältnis des Antriebsmoments eines kurvenäußeren Rads zum Antriebsmoment eines kurveninneren Rads derselben Antriebsachse mit wachsender Querbeschleunigung vergrößert. Zugleich oder alternativ kann vorgesehen sein, daß das Verhältnis des Antriebsmoments eines vorderen Rads zum Antriebsmoment eines hinteren Rads auf der selben Seite der Fahrzeuglängsachse mit wachsender Querbeschleunigung erhöht wird. Auch hier wird bevorzugt dafür gesorgt, daß die Summe der Antriebsmomente sämtlicher angetriebener Räder entsprechend der Leistungsvorgabe des Fahrers konstant bleibt um eine maximale Traktion sicherzustellen.

Bei den Mitteln zur Erfassung der Querbeschleunigung kann es sich um wenigstens einen unmittelbar die Querbeschleunigung messenden Querbeschleunigungssensor handeln. Der Querbeschleunigungssensor ist zweckmäßigerweise im Bereich der vorderen Räder angeordnet, um möglichst frühzeitig Querbeschleunigungsinformationen zu erhalten. Alternativ können die Mittel zur Erfassung der Querbeschleunigung auch abhängig von der mittels Sensoren erfaßten Fahrgeschwindigkeit des Kraftfahrzeugs und dem Lenkwinkel gelenkter Räder des Kraftfahrzeugs errechnet werden. Es versteht sich, daß zur Unterstützung des Lenkverhaltens auch Längsbeschleungigungssensoren vorhanden sein können.

Eine weitere Maßnahme, durch die das Lenkverhalten verbessert werden kann, besteht darin, daß der Steuerung Mittel zugeordnet sind, die den Lenkwinkel und/oder eine seitliche Änderung des Lenkwinkels gelenkter Räder des Kraftfahrzeugs erfassen und daß die Steuerung die wenigstens einem Elektromotor zugeführte elektrische Leistung so steuert, daß bei Beginn des Lenkvorgangs bis zum Erreichen einer stationären Kurvenfahrt ein die Einleitung des Lenkvorgangs unterstützendes Giermoment erzeugt wird. Durch diese Maßnahme kann die Ansprechempfindlichkeit der Lenkung verbessert werden, wobei das den Lenkvorgang unterstützende Giermoment bei Erreichen der stationären Kurvenfahrt, bei welcher sich der Lenkwinkel nicht mehr verändert, wieder verschwindet. Es versteht sich, daß dieses Giermoment ggf. zusätzlich zu Giermomentkomponenten, die nach anderen Prinzipien zur Verbesserung der Kurvenwilligkeit erzeugt werden, erzeugt werden kann.

Eine weitere Ausgestaltung betrifft die Verbesserung der Fahrtrichtungstabilität des Kraftfahrzeugs bei Seitenwind. Fahrtrichtungsabweichungen infolge von Seitenwind lassen sich beträchtlich vermindern, wenn der Steuerung Mittel zugeordnet sind, die ein durch Seitenwind hervorgerufenes Windgiermoment erfassen und die Steuerung die elektrische Leistung zumindest eines der Elektromotore so ändert, daß ein dem Windgiermoment entgegenwirkendes Giermoment bezogen auf die Hochachse des Kraftfahrzeugs entsteht. Die Steuerung kann hierbei zur Erzeugung des entgegenwirkenden Giermoments die elektrische Leistung der Elektromotore so steuern, daß das Antriebsmoment zumindest eines Rads auf einer Seite der Fahrzeuglängsachse erhöht und/oder das Antriebsmoment zumindest eines Rads auf der anderen Seite der Fahrzeuglängsachse erniedrigt wird. Ähnlich den Maßnahmen zur Verbesserung der Kurvenwilligkeit kann, falls erforderlich das Antriebsmoment bis in den Bereich eines sich umkehrenden Antriebsmoments, d.h. eines Bremsmoments erniedrigt werden.

Die das Windgiermoment erfassenden Mittel können mehrere in Richtung der Fahrzeuglängsachse in Abstand voneinander, beispielsweise im Bereich der Seitenflächen des Fahrzeugs angeordnete Staudrucksensoren umfassen. Das Windgiermoment läßt sich aber auch mit Hilfe eines Giergeschwindigkeitsensors und/oder wenigstens eines die Quer- und/oder Längsbeschleunigung des Kraftfahrzeugs messenden Beschleunigungssensors ermitteln. Um unterscheiden zu können, ob das von Beschleunigungssensoren ermittelte Giermoment durch eine Kurvenfahrt hervorgerufen wird, kann zusätzlich der Lenkeinschlag gelenkter Räder des Fahrzeugs überwacht werden.

Ein vom Fahrer während einer Kurvenfahrt, beispielsweise durch Loslassen des Gaspedals, hervorgerufener Lastwechsel kann zum Ausbrechen des Fahrzeugs führen, wenn hierdurch die Haftgrenze der Räder überschritten wird. Eine weitere Ausgestaltung betrifft die Stabilitätserhöhung des Fahrzeugs um dessen Hochachse bei einer vom Fahrer während einer Kurvenfahrt gewünschten Antriebsmomentänderung. Hierzu ist bei einer Antriebsanordnung mit wenigstens zwei Antriebsachsen, d.h. beispielsweise bei einem Fahrzeug mit Vierradantrieb vorgesehen, daß die Steuerung auf eine Änderung der Fahrpedalstellung anspricht und zumindest während eines Teils der durch die Änderung der Fahrpedalstellung bestimmten Beschleunigungsphase die Aufteilung der elektrischen Leistung zwischen den Elektromotoren der vorderen Antriebsachse und den Elektromotoren der hinteren Antriebsachse ändert und das Verhältnis der Antriebsleistung der vorderen Antriebsachse zur Antriebsleistung der hinteren Antriebsachse insbesondere erhöht. Wird bei einer vom Fahrer gewünschten Antriebsmomentänderung während der Kurvenfahrt das Verhältnis der Antriebsleistungen von vorderer Antriebsachse zu hinterer Antriebsachse zusätzlich zu der gewünschten Antriebsmomentänderung zugunsten der vorderen Antriebsachse geändert, so bewirkt dies insbesondere bei Annäherung an die Haftgrenze der Räder eine Stabilitätserhöhung des Fahrzeugs um seine Hochachse. Die Leistungsaufteilung zugunsten der Vorderachse bewirkt ein Untersteuern des Fahrverhaltens, so daß sich das Fahrzeug bei Annäherung an die Haftgrenze leichter beherrschen läßt.

Die Steuerung kann zum Erfassen einer Kurvenfahrbedingung geeignete Mittel umfassen, beispielsweise Sensoren die auf den Lenkwinkel ansprechen oder aber Querbeschleunigungssensoren oder dergleichen. Die Änderung der Fahrpedalstellung bewirkt eine Änderung der gesamten Antriebsleistung. Es hat sich als zweckmäßig herausgestellt, wenn die Aufteilung der Antriebsleistungen zwischen vorderer Antriebsachse und hinterer Antriebsachse abhängig von der Richtung der Fahrpedalstellungsänderung erfolgt. Wird die Fahrpedalstellung zur Ruhestellung hin geändert, so wird bevorzugt das Antriebsmoment der hinteren Antriebsachse für die Neuaufteilung der Antriebsleistungen gemindert. Im umgekehrten Fall bei einer Änderung der Fahrpedalstellung zu deren Vollaststellung hin wird zweckmäßigerweise das Antriebsmoment der vorderen Antriebsachse erhöht. Die Antriebsleistung der jeweils anderen Antriebsachse bleibt beispielsweise konstant.

Die Umverteilung der Antriebsleistung zugunsten der vorderen Antriebsachse kann zeitlich begrenzt sein, beispielsweise auf eine Zeitspanne in der sich der Fahrer auf die durch die Lastwechselreaktion entstehende Fahrsituation einstellen kann oder aber bis zum Erreichen eines neuen stationären Fahrzustands. Die Steuerung kann hierzu Zeitbegrenzungsmittel, beispielsweise Zeitglieder oder dergleichen umfassen.

In einer Variante kann die Steuerung Mittel zur Begrenzung der Geschwindigkeit der auf die Änderung der Fahrpedalstellung folgenden Änderung des Leistungsverhältnisses zwischen vorderer und hinterer Antriebsachse umfassen. Zweckmäßigerweise geben diese Mittel die Änderungsgeschwindigkeit des Leistungsverhältnisses vor, so daß sich die vom Fahrer gewünschte Lastwechselreaktion nur allmählich einstellt. Auch kann die Änderungsgeschwindigkeit von der Fahrgeschwindigkeit des Kraftfahrzeugs abhängen, beispielsweise derart, daß mit wachsender Fahrgeschwindigkeit die Änderungsgeschwindigkeit des Leistungsverhältnisses zunimmt.

Eine weitere Ausgestaltung betrifft die Kurvenstabilisierung des Fahrzeugs für den Fall, daß während einer Kurvenfahrt ein Systemfehler der elektrischen Komponenten der Antriebsanordnung, insbesondere der Antriebsmomentenregelung auftritt. Systemfehler dieser Art können, je nach dem welche Wichtigkeit sie haben, abhängig von der momentanen Fahrsituation eine unveränderte Fortsetzung der Kurvenfahrt zulassen oder aber zum Ausbrechen des Fahrzeugs führen. Ein Fehler in einer der elektrischen Komponenten der Antriebsanordnung führt in der Regel zu einer Änderung des Antriebsmoments an einem oder mehreren angetriebenen Rädern und damit zu einer Lastwechselreaktion. Hier ist es Aufgabe, die Fahrfähigkeit des Kraftfahrzeugs bei einem Systemfehler seiner elektrischen Komponenten soweit als möglich aufrechtzuerhalten, ohne daß es zu nicht mehr beherrschbaren Fahrzuständen kommt.

Ausgehend von einer Antriebsanordnung nach Anspruch 1 wird dies dadurch erreicht, daß der Steuerung Mittel zugeordnet sind, die Systemfehler der elektrischen Komponenten der Antriebsanordnung erfassen, daß der Steuerung ferner Mittel zugeordnet sind, die eine Kurvenfahrt des Fahrzeugs erfassen und daß die Steuerung bei Auftreten eines Systemfehlers während der Kurvenfahrt die zumindest einen Teil der Elektromotore zugeführte elektrische Leistung reduziert. Die Reduktion kann sofort und in vollem Umfang erfolgen oder aber mit einer vorgegebenen Änderungsgeschwindigkeit, die noch dazu von der Fahrgeschwindigkeit des Kraftfahrzeugs abhängt und sich mit wachsender Fahrgeschwindigkeit erhöht. Insbesondere in der letztgenannten Version können zu nicht mehr beherrschbaren Fahrzuständen führende Lastwechselreaktionen gut verhindert werden, da der Fahrer durch die Leistungsreduzierung nicht überrascht wird.

Das Ausmaß der Leistungsreduzierung wird zweckmäßigerweise davon abhängig gesteuert, welches Rad von dem Systemfehler betroffen ist. Da das hintere kurveninnere Rad während der Kurvenfahrt in der Regel das geringste Antriebsmoment überträgt, während das vordere kurvenäußere Rad am höchsten belastet ist, nimmt die Leistungsreduzierung zweckmäßigerweise in der Reihenfolge hinteres kurveninneres Rad, vorderes kurveninneres Rad und/oder hinteres kurvenäußeres Rad sowie vorderes kurvenäußeres Rad zu. In dieser Abstufung kann das vordere kurveninnere Rad und das hintere kurvenäußere Rad gleichwertig oder aber in der Wertigkeit vertauscht sein.

Soweit bei den vorstehenden Erläuterungen auf eine Generatoranordnung bezug genommen wird, kann es sich um einen einzelnen Generator handeln, der sämtliche Elektromotore gemeinsam speist oder aber um eine Mehrzahl gemeinsam von der Brennkraftmaschine angetriebene Generatoren, die jeweils nur einen oder eine Teilanzahl der Elektromotore treiben. Bei der elektronischen Steuerung handelt es sich zweckmäßigerweise um eine Programmsteuerung beispielsweise in Form eines Mikroprozessors oder dergleichen, die in an sich bekannter Weise über Stromsteuerelemente den aus der Generatoranordnung den Elektromotoren zugeführten Strom bei vorzugsweise konstanter Spannung steuert.

Im folgenden wird die Erfindung anhand einer Zeichnung näher erläutert. Hierbei zeigt:

Fig. 1    ein schematisches Blockschaltbild eines Ausführungsbeispiels einer erfindungsgemäßen Antriebsanordnung für ein Kraftfahrzeug;

Fig. 2    eine schematische Darstellung einer Anordnung zur Erfassung von Radlasten des Kraftfahrzeugs;

Fig. 3 und 4    Kraftdiagramme zur Erläuterung der Erfindung;

Fig. 5    ein Diagramm, das die Abhängigkeit der Antriebsmomente M von der Querbeschleunigung b des Kraftfahrzeugs zeigt;

Fig. 6    ein Diagramm, daß die Abhängigkeit des Antriebsmoments M von der Zeit t im Falle eines Systemfehlers der Antriebsanordnung zeigt und

Fig. 7    ein Diagramm, daß die Abhängigkeit einer Zeitkonstante $t_1$ in Fig. 6 von der Fahrgeschwindigkeit v des Kraftfahrzeugs zeigt.

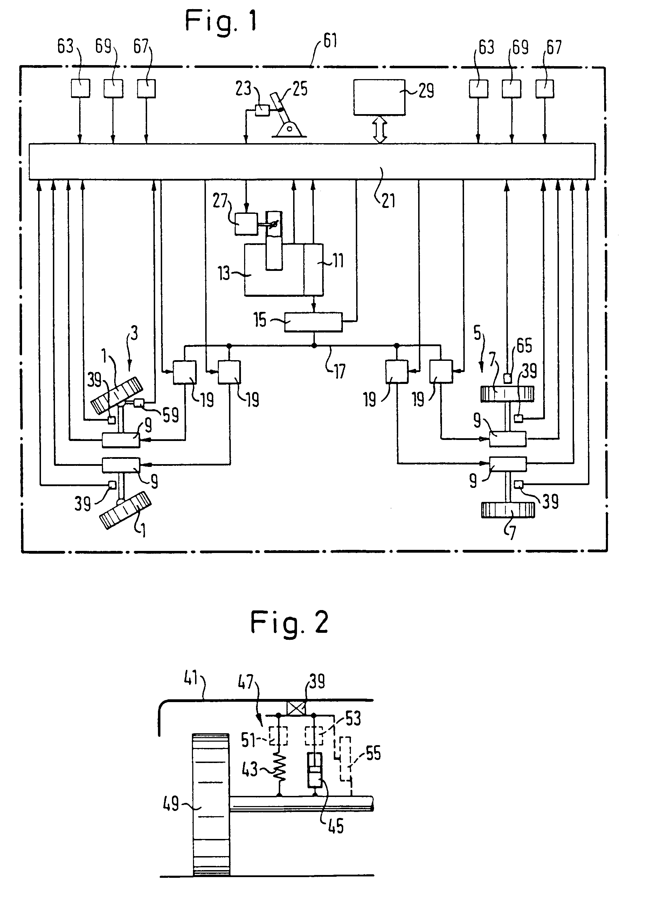

Fig. 1 zeigt schematisch die Antriebsanordnung eines vierradgetriebenen, nicht schienengebundenen Kraftfahrzeugs mit einer zwei lenkbare Räder 1 beiderseits einer den Fahrzeugschwerpunkt enthaltenden Fahrzeuglängsachse umfassenden Vorderachse 3 und einer Hinterachse 5 ebenfalls mit Rädern 7 beiderseits der Fahrzeuglängsachse. Jedem der Räder 1, 7 ist ein gesonderter Elektromotor 9 zugeordnet, der das Rad 1 bzw. 7 direkt antreibt. Die elektrische Leistung der Elektromotore 9 wird aus einem elektrischen Generator 11 zugeführt, der direkt von einer Brennkraftmaschine 13 angetrieben wird. Der Generator 11, bei dem es sich um einen Wechselstromgenerator handeln kann, speist über eine Generatorstromsteuerung 15 einen Gleichstromzwischenkreis 17, an den jeder der Elektromotore 9 über eine gesonderte Motorstromsteuerung 19 angeschlossen ist. Die Generatorstromsteuerung 15 und die Motorstromsteuerungen 19 werden von einer Fahrsteuerung 21 in nachfolgend noch näher erläuterter Weise abhängig von der mittels eines Sensors 23 erfaßten momentanen Stellung eines Fahrpedals 25, d.h. abhängig von der vom Fahrer des Kraftfahrzeugs gewünschten Antriebsleistung einerseits und andererseits abhängig von der mittels nachfolgend erläuterter Sensoren erfaßten Fahrsituation gesteuert. Die Fahrsteuerung 21 steuert den von der Generatorstromsteuerung 15 bei konstant gehaltener Generatorausgangsspannung an den Gleichstrom-Zwischenkreis 17 gelieferten Strom abhängig von der gewünschten Fahrleistung und steuert darüber hinaus über einen Stellantrieb 27 einer Drosselklappe oder einer Einspritzpumpe der Brennkraftmaschine 13 deren Drehmoment und/oder Drehzahl. Es versteht sich, daß der Fahrsteuerung 21 hierzu geeignete Rückmeldesignale des Generators 11 und der Brennkraftmaschine 13 zugeführt werden. Für die Regelung benötigte Kennlinienfelder der Brennkraftmaschine 13 und des Generators 11 sind in einem Datenspeicher 29 der Fahrsteuerung 21 gespeichert. Die Fahrsteuerung 21 steuert darüber hinaus die Aufteilung des von der Generatorstromsteuerung 15 gelieferten Gesamtstroms auf die einzelnen Elektromotore 9 mittels der als Stromsteller arbeitenden Motorstromsteuerungen 19. Für die Aufteilung benötigte Kennlinienfelder und Daten sind ebenfalls in dem Datenspeicher 29 gespeichert.

Die Möglichkeit der vorstehend erläuterten Antriebsanordnung das Antriebsmoment jedes Rads für sich in wählbarer Weise vorzugeben, ermöglicht weitgehende Korrekturen des Fahrverhaltens und insbesondere eine Beeinflussung der Querdynamik des Fahrzeugs speziell in Grenzsituationen. Durch geeignete Auslegung der Fahrsteuerung 21 kann ein in weiten Grenzen neutrales Fahrverhalten auch bei höherer Querbeschleunigung erreicht werden, das erst im Grenzbereich der Radhaftung zu einem leicht untersteuernden Verhalten führt und dem Fahrer die nahende Haftgrenze signalisiert. Aufgrund dieser Charakteristik bleibt das Fahrzeug auch bei Überschreiten der Haftgrenze insgesamt leicht beherrschbar.

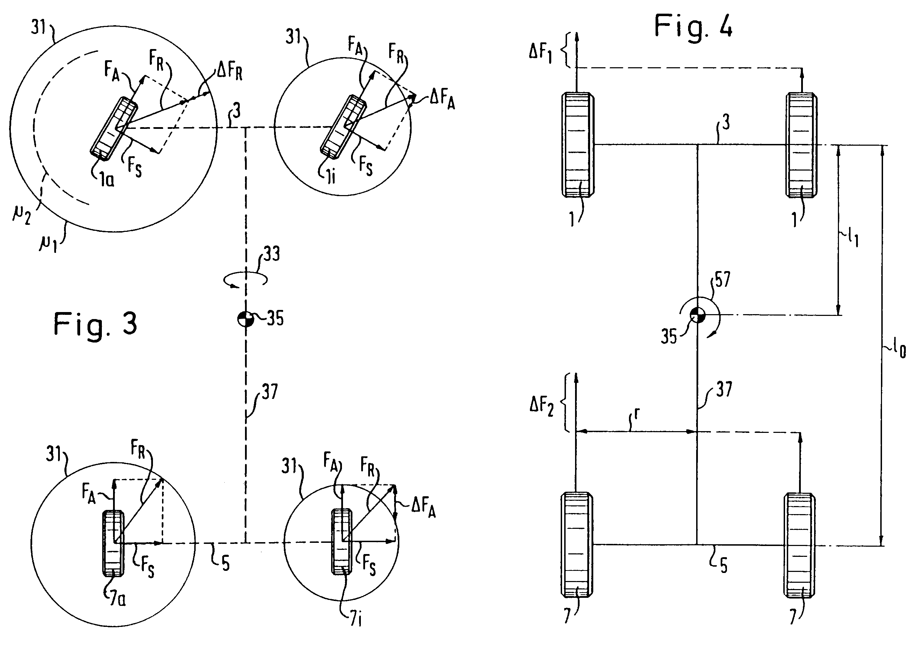

Unter einem ersten Aspekt sorgt die Fahrsteuerung 21 dafür, daß das Fahrzeug mit maximaler Traktion näher als bisher an die Haftgrenze herangeführt werden kann, wodurch frühzeitiges Ausbrechen des Fahrzeugs bei einer Kurvenfahrt verhindert werden kann. Zur Erläuterung des hierbei benutzten Prinzips soll zunächst anhand von Fig. 3 auf die bei einer Kurvenfahrt auftretenden Radkräfte näher eingegangen werden. Fig. 3 zeigt die bei Annäherung an die Haftungsgrenze des Vierradgetriebenen Fahrzeugs nach Fig. 1 an den Rädern 1 der Vorderachse 3 und den Rädern 7 der Hinterachse 5 auftretenden resultierenden Kräfte $F_R$, wobei die jeweils kurveninneren Räder mit einem Index i und die jeweils kurvenäußeren Räder mit einem Index a bezeichnet sind. Die resultierenden Kräfte $F_R$ sind im dargestellten Beispiel jeweils gleich groß und setzen sich jeweils aus einer durch Multiplikation mit dem dynamischen Raddurchmesser das Antriebsmoment des Rads bestimmenden Antriebskraftkomponente $F_A$ in Umfangsrichtung des Rads und einer Seitenführungskraftkomponente $F_S$ senkrecht dazu zusammen. Der Maximalwert, der zwischen dem Rad und der Fahrbahn übertragbaren Kräfte, wird durch den in Fig. 3 für jedes Rad bei 31 dargestellten Kammschen Kreis in idealisierter Form festgelegt. Der Kammsche Kreis folgt der Beziehung

$$\sqrt{F_A{}^2 + F_s{}^2} \leqq \mu * F_L \qquad (1)$$

wobei $F_A$ die in Umfangs- bzw. Längsrichtung wirkende Antriebskraft, $F_S$ die Seitenführungskraft und $F_L$ die normal zur Fahrbahn wirkende Radlast ist. $\mu$ ist der von der Fahrbahn und dem Reifen des Rads abhängige Reibbeiwert, der unter anderem von der Fahrbahnbeschaffenheit abhängt. Der Radius des Kammschen Kreises 31 hängt damit ebenfalls von der Fahrbahnbeschaffenheit ab, wie dies in Fig. 3 für das kurvenäußere Vorderrad 1a bei $\mu_1$ für trockene Fahrbahn und bei $\mu_2$ für nasse Fahrbahn dargestellt ist. Die Beziehung berücksichtigt, daß die resultierende Radkraft $F_R$ entsprechend dem Coulombschen Reibungsgesetz von der Radlast $F_L$ abhängt.

$$F_R = F_L * \mu \qquad (2)$$

Die Gleichung (1) liefert damit einen Zusammenhang, der es ermöglicht, in Kenntnis der Radlast $F_L$ und des Reibbeiwerts $\mu$ das Antriebsmoment des Rads und damit sowohl die Antriebskraftkomponente $F_A$ als auch die Seitenführungskraftkomponente $F_S$ so zu beeinflussen, daß die resultierende Radkraft $F_R$ stets innerhalb des Kammschen Kreises bleibt, das Rad also nicht auf der Fahrbahn zu gleiten beginnt.

Fig. 3 zeigt die Verhältnisse bei einem herkömmlichen vierradgetriebenen Kraftfahrzeug bei einer Kurvenfahrt kurz vor dem Ausbrechen des Fahrzeugs. Die Querbeschleunigung während der Kurvenfahrt übt auf das Fahrzeug ein durch einen Pfeil 33 angedeutetes Wankmoment um die den Fahrzeugschwerpunkt 35 enthaltende Fahrzeuglängsachse 37 aus. Das Wankmoment erhöht auf der kurvenäußeren Seite die Radlasten der kurvenäußeren Räder 1a und 7a, während die kurveninneren Räder 1i und 7i entlastet werden. Der Zunahme bzw. Abnahme der Radlast entspricht, wie Fig. 3 zeigt, eine Radiusvergrößerung des Kammschen Kreises auf der kurvenäußeren Seite bzw. eine Radiusverkleinerung auf der kurveninneren Seite. Darüber hinaus erzeugen die an den Vorderrädern angreifenden Lenkkräfte ein Nickmoment des Fahrzeugs, durch das die Radlasten der Vorderräder gegenüber den Radlasten der Hinterräder erhöht werden. Dementsprechend sind die Radien der Kammschen Kreise der Vorderräder jeweils größer als die Radien der auf der gleichen Seite der Längsachse 37 sich befindenden Hinterräder. Wie Fig. 3 zeigt kann damit das kurvenäußere Vorderrad jeweils die größte Radkraft übertragen, während das kurveninnere Hinterrad die kleinste Radkraft übertragen kann.

In der in Fig. 3 für ein herkömmliches vierradgetriebenes Kraftfahrzeug bei einer Kurvenfahrt kurz vor dem Ausbrechen des Fahrzeugs dargestellten Situation bleibt die resultierende Radkraft $F_R$ des kurenväußeren Vorderrads 1a mit einem Sicherheitsabstand $\Delta F_R$ innerhalb des Kammschen Kreises und kann ohne Schlupf sowohl die Antriebskraft $F_A$ als auch die Seitenführungskraft $F_S$ übertragen. Bei dem kurvenäußeren Hinterrad 7a erreicht die resultierende Radkraft $F_R$ gerade nicht den Kammschen Kreis mit der Folge, daß das Rad gerade noch an der Fahrbahn haftet. Bei den kurveninneren Rädern 1i und 7i hätte die resultierende Radkraft $F_R$ den Kammschen Kreis bereits überschritten mit der Folge, daß die Antriebskräfte $F_A$ und die Seitenführungskräfte $F_S$ nicht mehr (Räder 1i, 7i) übertragen werden können. Die kurveninneren Räder schlupfen damit bereits sowohl in Antriebsrichtung als auch in Seitenführungsrichtung. Würde auch das kurvenäußere Hinterrad 7a zu schlupfen beginnen, so würde das Fahrzeug ausbrechen.

Um die vorstehend erläuterte instabile Fahrsituation zu verhindern, überwacht die Fahrsteuerung 21 kontinuierlich für jedes Rad gesondert, ob die resultierende Radkraft $F_R$ bzw. die Seitenführungskraft $F_S$ und die Antriebskraft $F_A$ der Bedingung des Kammschen Kreises genügt, also kleiner als ein durch das Produkt aus Radlast und Reibbeiwert bestimmter Maximalwert ist. Bei Annäherung an den Maximalwert mindert die Fahrsteuerung 21 das Antriebsmoment des Elektromotors dieses Rads um einen Betrag $\Delta F_A$ ggf. zuzüglich eines gewissen Sicherheitsabstands um so die resultierende Radkraft $F_R$ auf Werte innerhalb des Kammschen Kreises zu reduzieren. Gleichzeitig sorgt die Fahrsteuerung 21 dafür, daß die Summe der Antriebskräfte $F_A$ bzw. die Summe der Antriebsmomente sämtlicher angetriebener Räder konstant bleibt, um die vom Fahrer gewünschte Antriebsleistung beibehalten zu können. Am Beispiel der Fig. 3 bedeutet dies, daß die Antriebskräfte der kurveninneren Räder 1i und 7i um die jeweiligen Werte $\Delta F_A$ gemindert und die Antriebskraft des kurvenäußeren Vorderrads 1a als einzigem Rad mit noch steigerungsfähigem Antriebsmoment um diese Minderungswerte erhöht wird. Wird durch diese Umverteilung der Antriebskräfte bzw. Antriebsmomente das in der gegebenen Kurvenfahrsituation maximal übertragbare Antriebsmoment überschritten, im Beispiel der Fig. 3, also der Sicherheitsabstand $\Delta F_R$ aufgebraucht, so mindert die Fahrsteuerung 21 insgesamt die Leistung der Elektromotore 9 gegenüber der vom Fahrer gewollten Antriebsleistung. In jedem Fall wird jedoch die maximal mögliche Traktion des Fahrzeugs erreicht.

Die Größe des Reibbeiwerts μ kann nach bekannten Methoden, beispielsweise aus Schlupfunterschieden zwischen den Rädern ermittelt werden oder aber über Fahrbahnbeschaffenheitswählschalter oder dergleichen vorgegeben werden.

Die Radlast $F_L$ kann mit Hilfe von Sensoren 39 (Fig. 1) für jedes Rad 1 bzw. 7 gesondert ermittelt werden. Fig. 2 zeigt Einzelheiten eines als Kraftmeßsensor ausgebildeten Sensors 39, über den sich ein Chassis 41 des Kraftfahrzeugs an einer Radaufhängungskomponente, hier einem eine Radfederung 43 und einem Stoßdämpfer 45 umfaßenden Federbein 47 eines Rads 49 abstützt. Der Sensor 39 erfaßt in diesem Fall unmittelbar eine die Radlast repräsentierende Größe. Alternativ können auch indirekte Meßmethoden vorgesehen sein. Beispielsweise können Kraftmeßsensoren 51 bzw. 53 jeweils direkt im Kraftübertragungsweg der Federung 43 bzw. des Stoßdämpfers 45 angeordnet sein um auch die von dem Stoßdämpfer dynamisch erzeugten Kräfte erfassen zu können. Aus dem mittels eines Wegsensors 55 nach Größe und/oder zeitlicher Änderung erfaßten Einfederungsweg des Federbeins 47 kann die Radlast ebenfalls errechnet werden.

Wie Fig. 4 zeigt, kann dem Fahrzeug durch geeignete Aufteilung der Antriebsmomente auf die auf gegenüberliegenden Seiten der Fahrzeuglängsachse 37 gelegenen Räder 1, 7 ein Giermoment 57 um die senkrecht zur Zeichenebene durch den Schwerpunkt 35 verlaufende Hochachse des Fahrzeugs aufgeprägt werden. Fig. 4 zeigt für den Fall der Geradeausfahrt, daß sich die Antriebskräfte der Räder 1 der Vorderachse 3 um einen Differenzbetrag $\Delta F_1$ und die Antriebskräfte der Räder 7 der Hinterachse 5 um einen Differenzbetrag $\Delta F_2$ unterscheiden. Die Differenzbeträge $\Delta F_1$ und $\Delta F_2$ erzeugen bei einem Abstand r der Räder von der den Schwerpunkt 35 enthaltenden Fahrzeuglängsachse 37 ein Giermoment $M_G$ entsprechend der Beziehung

$$M_G = (\Delta F_1 + \Delta F_2) * r \qquad (3)$$

Die Möglichkeit ein wählbares Giermoment zu erzeugen erlaubt es, das Eigenlenkverhalten des Fahrzeugs während einer Kurvenfahrt zu beeinflussen. In der Antriebsanordnung nach Fig. 1 erfaßt ein Lenkwinkelsensor 59 den momentanen Lenkwinkel und die Fahrsteuerung 21 steuert abhängig von dem momentanen Lenkwinkel die Aufteilung der Antriebsmomente beispielsweise abhängig von einem in dem Datenspeicher 29 gespeicherten Kennlinienfeld so, daß sich ein in weiten Bereichen neutrales Fahrverhalten des Fahrzeugs bei Kurvenfahrten ergibt. Die Antriebsmoment-Aufteilungsstrategie kann hierbei zweckmäßigerweise so gewählt sein, daß das Verhältnis des Antriebsmoments das kurvenäußeren Rads der Vorderachse 3 wie auch der Hinterachse 5 zum jeweils kurveninneren Rad dieser Antriebsachse einen durch Daten des Datenspeichers 29 vorgegebenen Wert größer als 1 hat. Die Fahrsteuerung 21 steuert jedoch nicht nur das Verhältnis der Antriebsmomente der Räder der einzelnen Antriebsachsen, sondern auch das Verhältnis der Summe der Antriebsmomente der Hinterachse 5 zur Summe der Antriebsmomente der Vorderachse 3. Dieses Summenverhältnis wird zweckmäßigerweise so gesteuert, daß es zwischen 0,5 und 1 liegt, sofern der Schwerpunkt 35 in der Fahrzeuglängsmittelebene liegt und das Verhältnis des Abstands $l_1$ des Schwerpunkts 35 von der Vorderachse 3 zum Achsabstand $l_o$ zwischen Vorderachse 3 und Hinterachse 5 in einem Bereich zwischen 0,4 und 0,6 liegt. Die das Giermoment beeinflussenden Antriebsmomentverhältnisse können konstant vorgegeben sein; die Verhältnisse können jedoch auch von weiteren Parametern, wie z.B. der Radlastverteilung oder der Querbeschleunigung des Fahrzeugs abhängig variiert werden.

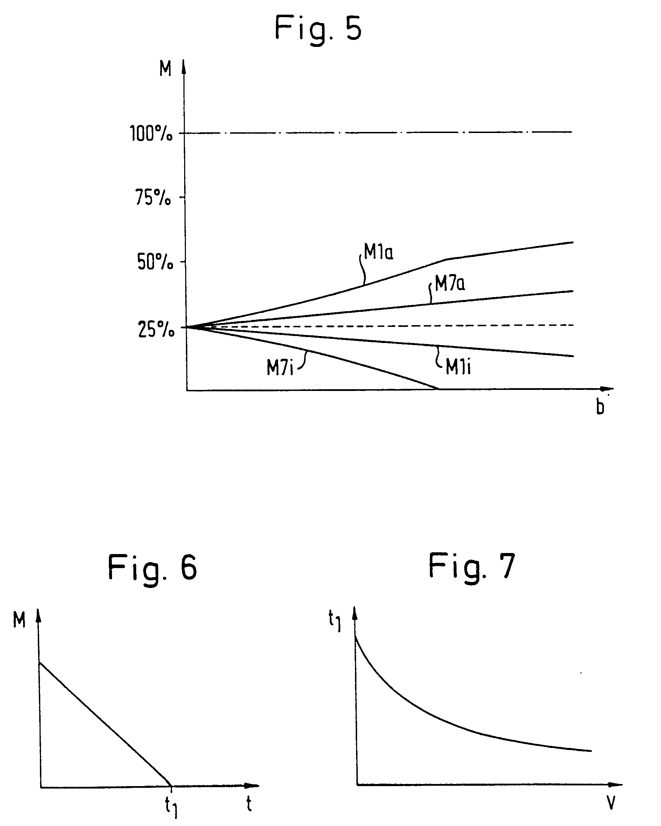

Fig. 5 zeigt ein Beispiel eines für die Beeinflussung des Eigenlenkverhaltens geeigneten, im Datenspeicher 29 gespeicherten Kennlinienfelds, dessen Kennlinien im Verlauf des Antriebsmoments M der einzelnen Räder in Abhängigkeit von der während einer Kurvenfahrt auftretenden Querbeschleunigung b des Fahrzeugs. Bei einer Querbeschleunigung b = 0, zumindest jedoch unterhalb eines Mindestwerts der Querbeschleunigung, d.h. bei im wesentlichen geradeaus führender Fahrt wird das Gesamt-Antriebsmoment (100 %) zu je 25 % auf jedes der vier Räder verteilt. Mit wachsender Querbeschleunigung nimmt das Antriebsmoment M1a des kurvenäußeren Vorderrads und das Antriebsmoment M7a des kurvenäußeren Hinterrads zu, während das Antriebsmoment des kurveninneren Vorderrads M1i und das Antriebsmoment des kurveninneren Hinterrad M7i abnimmt. Das Antriebsmoment M1a wächst hierbei mit wachsender Querbeschleunigung rascher an als das Antriebsmoment M7a des kurvenäußeren Hinterrads. In entsprechender Weise wird das Antriebsmoment M7i des kurveninneren Hinterrads rascher verringert als das Antriebsmoment M1i des kurveninneren Vorderrads. Um maximale Traktion zu erreichen ist für jeden Wert der Querbeschleunigung b die Summe der Antriebsmomente konstant gleich 100 % des vom Fahrer am Fahrpedal 25 eingestellten Werts. Dies läßt sich in einfacher Weise dadurch erreichen, daß die Kennlinie für das Antriebsmoment M1a des kurvenäußeren Vorderrads abhängig von der Querbeschleunigung b in dem Maß ansteigt, in dem die Kennlinie des Antriebsmoments M7i des kurveninneren Hinterrads abnimmt. Wie die Kennlinie für das Antriebsmoment M7i des kurveninneren Hinterrads zeigt, kann sich das Antriebsmoment auch zu Null verringern.

Die Steuerung der Antriebsmomente abhängig von der Querbeschleunigung gemäß Fig. 5 erfolgt zweckmäßigerweise alternativ zu der vorstehend anhand von Fig. 3 erläuterten radlastabhängigen Methode der Antriebsmomentminderung bei Annäherung an die Haftgrenze der Räder. Aber auch bei der Methode der Fig. 5 können die einzelnen Räder auf Radschlupf überwacht werden, um ggf. die den Antriebsrädern insgesamt zugeführte Antriebsleistung bei Überschreiten der Haftgrenze im Sinne einer Antischlupfregelung zu mindern.

Zum Erfassen der Querbeschleunigung sind, wie Fig. 1 zeigt, an dem bei 61 strichpunktiert angedeuteten Fahrzeugaufbau ein oder mehrere Querbeschleunigungssensoren 63 angebracht, die die Größe und das Vorzeichen der senkrecht zur Fahrzeuglängsachse gerichteten Querbeschleunigung erfassen. Zweckmäßigerweise ist zumindestens einer der Querbeschleunigungssensoren 63 im Bereich der Vorderachse 3 des Fahrzeugs angeordnet, was den Vorteil rascheren Ansprechens hat. Alternativ zur direkten Erfassung der Querbeschleunigung durch Querbeschleunigungssensoren, kann die Querbeschleunigung auch aus Informationen anderer Sensoren, insbesondere eines die Fahrgeschwindigkeit des Fahrzeugs erfassenden Sensors 65 und dem Lenkwinkelsensor 59 errechnet werden.

Die vorstehend erläuterten Strategien der Verbesserung des Eigenlenkverhaltens durch Erzeugen eines Giermoments können auch zur Verbesserung der Ansprechempfindlichkeit der Lenkung beim Einlenken zum Beginn einer Kurvenfahrt ausgenutzt werden. Abhängig von dem mittels des Sensors 59 erfaßten Lenkwinkel und/oder der zeitlichen Änderung des Lenkwinkels kann der Beginn des Lenkvorgangs und das Erreichen einer stationären Kurvenfahrt erfaßt werden. Die Fahrsteuerung 21 sorgt dann während dieses Fahrtabschnitts für ein das Einlenken in die Kurve unterstützendes Giermoment entsprechend der anhand von Fig. 4 erläuterten Betriebsweise. Es versteht sich, daß der Beginn und das Erreichen der stationären Kurvenfahrt auch mit Hilfe von Beschleunigungssensoren oder dergleichen erfaßt werden kann.

Seitenwindkräfte können auf das Fahrzeug ebenfalls Giermomente ausüben, die die Fahrtrichtungstabilität des Fahrzeugs beeinflussen. Wie Fig. 1 zeigt, sind an dem Fahrzeug in Fahrzeuglängsrichtung verteilt, mehrere Staudrucksensoren 67 verteilt angeordnet. Die Fahrsteuerung 21 ermittelt aus der Differenz der Staudruckinformationen eine das Windgiermoment repräsentierende Information und steuert die Antriebsmomente der Antriebsräder so, daß ein das Windgiermoment kompensierendes Giermoment aufgebracht wird. Auf diese Weise wird das Fahrzeug um seine Hochachse in der ursprünglichen Fahrtrichtung stabilisiert. Das Windgiermoment kann alternativ auch durch Beschleunigungssensoren, wie z.B. Giergeschwindigkeitsensoren oder sonstige geeignete ein Giermoment erfassende Anordnungen von Beschleunigungssensoren ermittelt werden.

Ändert der Fahrer während einer Kurvenfahrt plötzlich die Fahrpedalstellung, beispielsweise weil er glaubt zu rasch in eine Kurve eingefahren zu sein, worauf er während der Kurvenfahrt das Fahrpedal 25 abrupt losläßt, so kann es zu unerwünschten Lastwechselreaktionen des Fahrverhaltens kommen, die bis hin zum Ausbrechen des Fahrzeugs gehen können. Beispielsweise nickt das Fahrzeug beim Loslassen des Gaspedals an der Vorderachse 3 ein, mit der Folge, daß die Radlast an der Vorderachse erhöht und an der Hinterachse reduziert wird. Hinzu kommt bei konventionellen Antrieben, daß zusätzlich das Bremsmoment der nunmehr im Schubbetrieb arbeitenden Brennkraftmaschine die Hinterräder weiter an die Haftgrenze heranführt, was zu einem Ausbrechen des Fahrzeugs führen kann. Um Lastwechselreaktionen dieser Art zu vermeiden spricht die Fahrsteuerung 21 während der Kurvenfahrt auf Veränderungen der Fahrpedalstellung an und sorgt für eine Aufteilung der Antriebsmomente zwischen Vorderachse 3 und Hinterachse 5 zugunsten der Vorderachse 3. Wird das Antriebsmoment durch Loslassen des Fahrpedals 25 verringert, so wird das Antriebsmoment vorrangig an der Hinterachse 5 verringert, ggf. unter anschließender Verringerung des Antriebsmoments der Vorderachse 3. Wird hingegen das Fahrpedal 25 in Richtung Vollaststellung verändert, so wird das Antriebsmoment vorrangig an der Vorderachse 3 erhöht. Die Veränderung der Aufteilung der Antriebsmomente auf Vorderachse 3 und Hinterachse 5 infolge einer vom Fahrer gewünschten Antriebsmomentänderung wird von der Fahrsteuerung 21 beispielsweise durch ein Zeitglied bis zum Erreichen des neuen stationären Fahrzustands zeitlich begrenzt. Die Umverteilung der Antriebsmomente Zugunsten der Vorderachse 3 bewirkt im dynamischen Laständerungsfall eine Stabilitätserhöhung des Fahrzeugs um seine Hochachse und sorgt bei Annäherung an die Haftgrenze der Räder für leicht untersteuerndes Verhalten.

Zu unerwünschten Lastwechselreaktionen kann es auch kommen, wenn sich die Antriebsmomentverteilung aufgrund eines Systemfehlers oder dergleichen der elektrischen Komponenten der Antriebsanordnung während einer Kurvenfahrt ändert. Hierbei sind die Konsequenzen der einzelnen möglichen Fehler für die Fahrsicherheit unterschiedlich, so daß die Fahrsteuerung 21, die die elektrischen Komponenten in herkömmlicher Weise auf systemfehler überwacht, eine Wertung der Fehler nach Wichtigkeit bzw. Priorität vornimmt. Insbesondere reagiert die Fahrsteuerung 21 unterschiedlich auf Systemfehler abhängig davon, bei welchem Rad sie auftreten. Systemfehler, die zu einem Verlust des Antriebsmoments des kurvenäußeren Vorderrads, welches die höchste Haftungsgrenze hat, führen, beantwortet die Fahrsteuerung 21 mit einer stärkeren Reduzierung des gesamten Antriebsmoments als im Falle des Verlusts des Antriebsmoments des kurveninneren hinteren Rads. Das kurvenäußere hintere Antriebsrad und das kurveninnere vordere Antriebsrad werden in der Prioritätenreihenfolge dazwischenliegend bewertet. Je nach der Art des erkannten Systemfehlers kann die Antriebsleistung insgesamt oder auch nur teilweise reduziert werden. Um Lastwechselreaktionen bei plötzlicher Veränderung möglichst gering zu halten, ist zweckmäßigerweise vorgesehen, daß die Fahrsteuerung 21 das Antriebsmoment einzelner Räder und ggf. das gesamte Antriebsmoment entsprechend einem vorbestimmten Änderungsprofil mit einer festgelegten Zeitkonstante mindert. Fig. 6 zeigt in einem Zeitdiagramm eine Minderung des Antriebsmoments M mit einer konstanten Rate innerhalb eines vorbestimmten Zeitabschnitts t1. Die Fahrsteuerung 21 gibt den Zeitabschnitt t1 abhängig von der mittels des Fahrgeschwindigkeitssensors 65 ermittelten Fahrgeschwindigkeit vor, beispielsweise indem der Zeitabschnitt t1 mit wachsender Fahrgeschwindigkeit abnimmt, womit das Antriebsmoment M bei Erkennen eines Systemfehlers um so rascher reduziert wird, je größer die Fahrgeschwindigkeit ist.

Wie Fig. 1 zusätzlich zeigt, können zur Beeinflussung der Querdynamik des Fahrzeugs auch Informationen von Längsbeschleunigungssensoren herangezogen werden, wie sie beispielsweise bei 69 in Fig. 1 angedeutet sind.

## Patentansprüche

1. Antriebsanordnung für ein Kraftfahrzeug mit jeweils zumindest einem angetriebenen Rad (1, 7) auf beiden Seiten seiner Fahrzeuglängsachse (37), umfassend:
eine Brennkraftmaschine (13), eine von der Brennkraftmaschine (13) angetriebene elektrische Generatoranordnung (11), je einen Elektromotor (9) für jedes der angetriebenen Räder (1, 7) und eine die Größe der den einzelnen Elektromotoren (9) aus der Generatoranordnung (11) zugeführten elektrischen Leistung steuernde elektronische Steuerung (15, 19, 21),
wobei der Steuerung (15, 19, 21) Radlasterfassungsmittel (39; 51, 53; 55) zugeordnet sind, die die Größe der momentanen Radlast jedes der angetriebenen Räder (1, 7) erfassen, dadurch gekennzeichnet,
daß der Steuerung (15, 19, 21) Mittel (21, 29) zugeordnet sind, die abhängig von der Radlast einen Maximalwert der von jedem angetriebenen Rad übertragbaren resultierenden Radkraft vorgeben oder ermitteln, und daß die Steuerung (15, 19, 21) die jedem Elektromotor (9) zugeführte elektrische Leistung abhängig von der erfaßten momentanen Radlast des von dem Elektromotor (9) angetriebenen Rads (1, 7) so steuert, daß die resultierende Radkraft kleiner als der Maximalwert ist,
wobei die Steuerung (15, 19, 21) die den einzelnen Elektromotoren (9) zugeführte elektrische Leistung mit zunehmender Radlast des von dem Elektromotor (9) angetriebenen Rads (1, 7) erhöht und mit abnehmender Radlast erniedrigt.

2. Antriebsanordnung nach Anspruch 1,
dadurch gekennzeichnet,
daß daß die Steuerung (15, 19, 21) die von der Generatoranordnung (11) an sämtliche Elektromotore (9) insgesamt gelieferte elektrischen Leistung auf einem vorgegebenen Wert hält und die Aufteilung der elektrischen Leistung auf die Elektromotore (9) abhängig von der Radlast der angetriebenen Räder (1, 7) steuert.

3. Antriebsanordnung nach einem der Ansprüche 1 oder 2,
dadurch gekennzeichnet,
daß die Steuerung (15, 19, 21) bei rechnerischer Überschreitung des Maximalwerts der Radkraft eines der angetriebenen Räder (1, 7) das von dem Elektromotor (9) dieses Rads (1, 7) gelieferte Antriebsmoment mindert und das Antriebsmoment des Elektromotors (9) wenigstens eines weiteres Rads (1, 7) erhöht.

4. Antriebsanordnung nach Anspruch 3,
dadurch gekennzeichnet,
daß die Steuerung (15, 19, 21) die Antriebsmomente der Elektromotore (9) sämtlicher weiterer Elektromotore (9) erhöht.

5. Antriebsanordnung nach einem der Ansprüche 1 bis 4,
dadurch gekennzeichnet,
daß die Radlasterfassungsmittel an Radaufhängungskomponenten (47) der angetriebenen Räder (1, 7) angeordnete Sensoren (39; 51, 53) umfassen, die jeweils eine die Radlast repräsentierende Größe insbesondere die von einer Radfederung (43) oder/und einem Stoßdämpfer (45) übertragene Kraft direkt erfassen.

6. Antriebsanordnung nach einem der Ansprüche 1 bis 4,
dadurch gekennzeichnet,
daß die Radlasterfassungsmittel an Radaufhängungskomponenten (47) der angetriebenen Räder (1, 7) angeordnete Sensoren (55) umfassen, die jeweils eine von der Radlast abhängige Größe, insbesondere den von der Radlast abhängigen Einfederungsweg nach Größe und/oder zeitlicher Änderung erfassen und hiervon abhängig eine die Radlast repräsentierende Größe errechnen.

7. Antriebsanordnung nach einem der Ansprüche 1 bis 6,
dadurch gekennzeichnet,
daß der Steuerung (15, 19, 21) Kurvenfahrterfassungsmittel (59, 63) zugeordnet sind, die eine Kurvenfahrt erfassen, und daß die Steuerung (15, 19, 21) während der Kurvenfahrt die Aufteilung der den Elektromotoren (9) von auf gegenüberliegenden Seiten der Fahrzeuglängsachse (37) angeordneten Rädern (1, 7) zugeführten elektrischen Leistung zur Erzeugung eines das Eigenlenkverhalten beeinflussenden Giermoments so ändert, daß sich das Antriebsmoment an zumindest einem Rad (1a, 7a) auf der kurvenäußeren Seite der Fahrzeuglängsachse (37) erhöht und/oder das Antriebsmoment an zumindest einem Rad (1i, 7i) auf der kurveninneren Seite der Fahrzeuglängsachse (37) erniedrigt.

8. Antriebsanordnung nach Anspruch 7,
dadurch gekennzeichnet,
daß die Steuerung (15, 19, 21) die elektrische Leistung der Elektromotore (9) von gemeinsam einer Antriebsachse (3, 5) zugeordneten Rädern (1, 7) so steuert, daß das Verhältnis des Antriebsmoments des kurvenäußeren Rads (1a, 7a) der Antriebsachse (3, 5) zum Antriebsmoment des kurveninneren Rads (1i, 7i) dieser Antriebsachse (3, 5) im wesentlichen einen vorgegebenen Wert größer 1 hat.

9. Antriebsanordnung nach Anspruch 7 oder 8,
dadurch gekennzeichnet,
daß das Kraftfahrzeug zumindest eine vordere (3) und eine hintere (5) Antriebsachse hat und daß die Steuerung (15, 19, 21) die elektrische Leistung der Elektromotore (9) der vorderen (3) und der hinteren (5) Antriebsachse so steuert, daß das Verhältnis der Summe der Antriebsmomente der hinteren Antriebsachse (5) zur Summe der Antriebsmomente der vorderen Antriebsachse (3) im wesentlichen einen vorgegebenen Wert hat.

10. Antriebsanordnung nach Anspruch 7 bis 9,
dadurch gekennzeichnet,
daß die Steuerung (15, 19, 21) die den einzelnen Elektromotoren (9) zugeführte elektrische Leistung so steuert, daß die Summe der Antriebsmomente der Elektromotore (9) sämtlicher angetriebenen Räder (1, 7) bei einer Änderung der elektrischen Leistung der einzelnen Elektromotore (9) im wesentlichen konstant bleibt.

11. Antriebsanordnung nach einem der Ansprüche 7 bis 10,
dadurch gekennzeichnet,
daß der Steuerung (15, 19, 21) Querbeschleunigungserfassungsmittel (63; 59, 65) zugeordnet sind, die die Größe und/oder Richtung einer auf das Kraftfahrzeug wirkenden Querbeschleunigung erfassen, und daß die Steuerung (15, 19, 21) die Aufteilung der erzeugten elektrischen Leistung auf die einzelnen Elektromotore (9) und/oder das Verhältnis der Antriebsmomente der angetriebenen Räder (1, 7) abhängig von der erfaßten Querbeschleunigung so steuert, daß das Verhältnis des Antriebsmoments eines kurvenäußeren Rads (1a, 7a) zum Antriebsmoment eines kurveninneren Rads (1i, 7i) derselben Antriebsachse (3, 5) mit wachsender Querbeschleunigung erhöht und/oder das Verhältnis des Antriebsmoments eines vorderen Rads (1) zum Antriebsmoment eines hinteren Rads (7) auf derselben Seite der Fahrzeuglängsachse (37) mit wachsender Querbeschleunigung erhöht wird.

12. Antriebsanordnung nach Anspruch 11,
dadurch gekennzeichnet,
daß die Querbeschleunigungserfassungsmittel wenigstens einen unmittelbar die Querbeschleunigung messenden, vorzugsweise im Bereich der vorderen Räder (1) angeordneten Querbeschleunigungssensor (63) umfassen.

13. Antriebsanordnung nach Anspruch 11 oder 12,
dadurch gekennzeichnet,
daß die Querbeschleunigungserfassungsmittel die Querbeschleunigung abhängig von der mittels Sensoren (59, 65) erfaßten Fahrgeschwindigkeit des Kraftfahrzeugs und dem Lenkwinkel gelenkter Räder (1) des Kraftfahrzeugs errechnen.

14. Antriebsanordnung nach einem der Ansprüche 7 bis 13,
dadurch gekennzeichnet,
daß der Steuerung Mittel zur Erfassung der Beschleunigung in Fahrzeuglängsrichtung vorzugsweise wenigstens ein die Längsbeschleunigung messender Längsbeschleunigungssensor (69) zugeordnet sind.

15. Antriebsanordnung nach einem der Ansprüche 7 bis 14,
dadurch gekennzeichnet,
daß die Steuerung (15, 19, 21) auf eine Änderung der Fahrpedalstellung während einer Kurvenfahrt anspricht und zumindest während eines Teils der durch die Änderung der Fahrpedalstellung bestimmten Beschleunigungs- oder Verzögerungsphase die Aufteilung der elektrischen Leistung zwischen den Elektromotoren (9) der vorderen Antriebsachse (3) und den Elektromotoren (9) der hinteren Antriebsachse (5) in der Weise steuert, daß das Verhältnis der von Rädern (1) der vorderen Antriebsachse (3) aufgebrachten Antriebsmomente zu den von den Rädern (7) der hinteren Antriebsachse (5) aufgebrachten Antriebsmomente zunimmt.

**16.** Antriebsanordnung nach Anspruch 15, dadurch gekennzeichnet, daß die Steuerung (15, 19, 21) bei einer Änderung der Fahrpedalstellung zu deren Ruhestettung hin das Antriebsmoment vorrangig nur der hinteren Antriebsachse mindert und/oder bei einer Änderung der Fahrpedalstellung zu deren Vollaststellung hin das Antriebsmoment vorrangig nur der vorderen Antriebsachse (3) erhöht.

**17.** Antriebsanordnung nach einem der Ansprüche 15 oder 16, dadurch gekennzeichnet, daß die Steuerung (15, 19, 21) Begrenzungsmittel (21) zur Begrenzung der Geschwindigkeit und/oder zur zeitlichen Begrenzung der auf die Änderung der Fahrpedalstellung folgenden Änderung des Leistungsverhältnisses umfaßt.

**18.** Antriebsanordnung nach Anspruch 17, dadurch gekennzeichnet, daß die Steuerung (15, 19, 21) auf die Fahrgeschwindigkeit des Kraftfahrzeugs anspricht und die Begrenzungsmittel (21) die Änderungsgeschwindigkeit mit wachsender Fahrgeschwindigkeit erhöhen.

**19.** Antriebsanordnung nach einem der Ansprüche 7 bis 18, dadurch gekennzeichnet, daß der Steuerung (15, 19, 21) Fehlerkennungsmittel (21) zugeordnet sind, die Systemfehler der elektrischen Komponenten der Antriebsanordnung erfassen, und daß die Steuerung (15, 19, 21) bei Auftreten eines Systemfehlers während der Kurvenfahrt bei mindestens einem Elektromotor (9) die zugeführte elektrische Leistung reduziert und das Ausmaß der Leistungsreduzierung davon abhängig steuert, welches Rad (1, 7) von dem Systemfehler betroffen ist, wobei die Leistungsreduzierung in der Reihenfolge hinteres kurveninneres Rad (7i), vorderes kurveninneres Rad (1i) und/oder hinteres kurvenäußeres Rad (7a), vorderes kurvenäußeres Rad (1a) zunimmt.

**20.** Antriebsanordnung nach Anspruch 19, dadurch gekennzeichnet, daß die Steuerung (15, 19, 21) die elektrische Leistung sofort reduziert.

**21.** Antriebsanordnung nach Anspruch 19, dadurch gekennzeichnet, daß die Steuerung (15, 19, 21) die elektrische Leistung mit einer vorgegebenen Änderungsgeschwindigkeit reduziert.

**22.** Antriebsanordnung nach Anspruch 21, dadurch gekennzeichnet, daß die Steuerung (15, 19, 21) mittels eines Sensors (65) die Fahrgeschwindigkeit des Kraftfahrzeugs erfaßt und die Größe der Änderungsgeschwindigkeit mit wachsender Fahrgeschwindigkeit erhöht.

**23.** Antriebsanordnung nach einem der Ansprüche 1 bis 22, dadurch gekennzeichnet, daß der Steuerung (15, 19, 21) Lenkwinkelerfassungsmittel (59) zugeordnet sind, die den Lenkwinkel und/oder eine zeitliche Änderung des Lenkwinkels gelenkter Räder (1) des Kraftfahrzeugs erfassen und daß die Steuerung (15, 19, 21) die wenigstens einem Elektromotor (9) zugeführte elektrische Leistung so steuert, daß bei Beginn des Lenkvorgangs bis zum Erreichen einer stationären Kurvenfahrt ein die Einleitung des Lenkvorgangs unterstützendes Giermoment erzeugt wird.

**24.** Antriebsanordnung nach einem der Ansprüche 1 bis 23, dadurch gekennzeichnet, daß der Steuerung (15, 19, 21) Windgiermomenterfassungsmittel (67; 63, 69) zugeordnet sind, die ein durch Seitenwind hervorgerufenes Windgiermoment erfassen, und daß die Steuerung (15, 19, 21) die elektrische Leistung zumindest eines der Elektromotore (9) so ändert, daß ein dem Windgiermoment entgegenwirkendes Giermoment bezogen auf die Hochachse des Kraftfahrzeugs entsteht, indem das Antriebsmoment zumindest eines Rads (1, 7) auf einer Seite der Fahrzeuglängsachse (37) erhöht und/oder das Antriebsmoment zumindest eines Rads (1, 7) auf der anderen Seite der Fahrzeuglängsachse (37) insbesondere auch bis in den Bereich eines sich umkehrenden Antriebsmoments erniedrigt wird.

**25.** Antriebsanordnung nach Anspruch 24, dadurch gekennzeichnet, daß die Windgiermomenterfassungsmittel mehrere in Richtung der Fahrzeuglängsachse im Abstand voneinander angeordnete Staudrucksensoren (67) umfassen.

**26.** Antriebsanordnung nach einem der Ansprüche 24 oder 25, dadurch gekennzeichnet, daß die Windgiermomenterfassungsmittel wenigstens einen Quergeschwindigkeitssensor und/oder wenigstens einen die Quer- und/oder Längsbeschleunigung des Kraftfahrzeugs messenden Beschleunigungssensor (63, 69) umfassen.

**Claims**

**1.** A drive arrangement for a motor vehicle with at least one driven wheel (1, 7) on each side of the vehicle's longitudinal axis (37), comprising:

an internal combustion engine (13), an electrical generator arrangement (11) driven by the internal combustion engine (13), an electric motor (9) for each of the driven wheels (1, 7) and an electronic control means (15, 19, 21) controlling the amount of electrical power supplied to the individual electric motors (9) from the generator arrangement (11), the control means (15, 19, 21) having associated with it wheel load detection means (39; 51, 53; 55), which detect the amount of instantaneous wheel load of each of the driven wheels (1, 7), characterized in that associated with the control means (15, 18, 21) are means (21, 29) which, dependent on the wheel load, predetermine or evaluate a maximum value for the resultant wheel force transmittable by each driven wheel, and in that the control means (15, 19, 21) controls the electrical power supplied to each electric motor (9) in dependence on the detected instantaneous wheel load of the wheel (1, 7) driven by the electric motor (9) in such a way that the resultant wheel force is less than the maximum value, the control means (15, 19, 21) increasing the electrical power supplied to the individual electric motors (9) with increasing wheel load of the wheel (1, 7) driven by the electric motor (9) and lowers it with diminishing wheel load.

2. A drive arrangement according to claim 1, characterized in that the control means (15, 19, 21) keeps the electrical power supplied overall to all the electric motors (9) by the generator arrangement (11) to a predetermined value and controls distribution of the electrical power to the electric motors (9) in dependence on the wheel load of the driven wheels (1, 7).

3. A drive arrangement according to either one of claims 1 or 2, characterized in that, when the maximum value of the wheel force of one of the driven wheels (1, 7) is calculated as exceeded, the control means (15, 19, 21) reduces the driving torque supplied by the electric motor (9) associated with this wheel (1, 7) and increases the driving torque of the electric motor (9) of at least one other wheel (1, 7).

4. A drive arrangement according to claim 3, characterized in that the control means (15, 19, 21) increases the driving torques of the electric motors (9) of all other electric motors (9).

5. A drive arrangement according to any one of claims 1 to 4, characterized in that the wheel load detection means comprise sensors (39; 51, 53) arranged on wheel suspension components (47) of the driven wheels (1, 7), which sensors (39; 51, 53) directly detect a value representing the wheel load, said value in particular being the force transmitted by the wheel spring system (43) and/or a shock absorber (45).

6. A drive arrangement according to any one of claims 1 to 4, characterized in that the wheel load detection means comprise sensors (55) arranged on wheel suspension components (47) of the driven wheels (1, 7), each of which sensors detects a value dependent on the wheel load, in particular the spring deflection path dependent on the wheel load according to amount and/or temporal alteration and, in dependence thereon, calculate a value representing the wheel load.

7. A drive arrangement according to any one of claims 1 to 6, characterized in that associated with the control means (15, 19, 21) are cornering detection means (59, 63) which detect cornering, and in that, during cornering, the control means (15, 19, 21) so alters the distribution of the electrical power supplied to the electrical motors (9) by wheels (1, 7) arranged on opposite sides of the vehicle's longitudinal axis (37) to generate a yawing moment influencing the roll steer effect that the driving torque increases at at least one wheel (1a, 7a) on the outer cornering side of the vehicle's longitudinal axis (37) and/or the driving torque is reduced at at least one wheel (1i, 7i) on the inner cornering side of the vehicle's longitudinal axis (37).

8. A drive arrangement according to claim 7, characterized in that the control means (15, 19, 21) so controls the electrical power of the electric motors (9) of wheels (1,7) associated jointly with one driving axle (3, 5) that the ratio of the driving torque of the outer cornering wheel (1a, 7a) of the driving axle (3, 5) to the driving torque of the inner cornering wheel (1i, 7i) of this driving axle (3, 5) essentially has a predetermined value greater than 1.

9. A drive arrangement according to claim 7 or claim 8, characterized in that the motor vehicle has at least one front (3) and one rear (5) driving axle and in that the control means (15, 19, 21) so controls the electrical power of the electric motors (9) of the front (3) and rear (5) driving axles that the ratio of the sum of the driving torques of the rear driving axle (5) to the sum of the driving torques of the front driving axle (3) essentially has a predetermined value.

10. A drive arrangement according to claims 7 to 9, characterized in that the control means (15, 19, 21) so controls the electrical power supplied to the individual electric motors (9) that the sum of the driving torques of the electric motors (9) of all the driven wheels (1, 7) remains substantially constant upon alteration of the electrical power of the individual electric motors (9).

11. A drive arrangement according to any one of claims 7 to 10, characterized in that associated with the control means (15, 19, 21) are transverse acceleration detection means (63; 59, 65), which detect the amount and/or direction of transverse acceleration acting on the motor vehicle, and in that the control means (15, 19, 21) so controls the distribution of the electrical power generated to the individual electric motors (9) and/or the ratio of the driving torques of the driven wheels (1, 7) in dependence on the detected transverse acceleration that the ratio of the driving torque of an outer cornering wheel (1a, 7a) to the driving torque of an inner cornering wheel (1i, 7i) of the same driving axle (3, 5) increases with growing transverse acceleration and/or the ratio of the driving torque of a front wheel (1) to the driving torque of a rear wheel (7) on the same side of the vehicle's longitudinal axis (37) is increased with growing transverse acceleration.

12. A drive arrangement according to claim 11, characterized in that the transverse acceleration detection means comprise at least one transverse acceleration sensor (63) directly measuring the transverse acceleration and preferably arranged in the area of the front wheels (1).

13. A drive arrangement according to claim 11 or claim 12, characterized in that the transverse acceleration detection means calculate the transverse acceleration in dependence on the travelling speed of the motor vehicle, detected by means of sensors (59, 65), and the steering angle of steered wheels (1) of the motor vehicle.

14. A drive arrangement according to any one of claims 7 to 13, characterized in that associated with the control means are means for detecting the acceleration in the longitudinal direction of the vehicle, said means preferably consisting of at least one longitudinal acceleration sensor (69) measuring the longitudinal acceleration.

15. A drive arrangement according to any one of claims 7 to 14, characterized in that the control means (15, 19, 21) reacts to an alteration in the accelerator pedal position during cornering and, at least during part of the acceleration or braking phase determined by the alteration in the accelerator pedal position, controls the distribution of the electrical power between the electric motors (9) of the front driving axle (3) and the electric motors (9) of the rear driving axle (5) in such a way that the ratio of the driving torques applied by wheels (1) of the front driving axle (3) to the driving torques applied by the wheels (7) of the rear driving axle (5) increases.

16. A drive arrangement according to claim 15, characterized in that, during an alteration in the accelerator pedal position towards the idle position thereof, the control means (15, 19, 21) reduces the driving torque as a matter of priority only of the rear driving axle and/or, during an alteration of the accelerator pedal position towards the full-load position thereof, increases the driving torque as a matter of priority only of the front driving axle (3).

17. A drive arrangement according to either one of claims 15 or 16, characterized in that the control means (15, 19, 21) comprises check means (21) for limiting the speed and/or for temporal limitation of the alteration of the power ratio following the alteration of the accelerator pedal position.

18. A drive arrangement according to claim 17, characterized in that the control means (15, 19, 21) reacts to the travel speed of the motor vehicle and the check means (21) increase the alteration speed with increasing travel speed.

19. A drive arrangement according to any one of claims 7 to 18, characterized in that associated with the control means (15, 19, 21) are error recognition means (21) which detect system errors in the electrical components of the drive arrangement, and in that, upon the appearance of a system error in at least one electric motor (9) during cornering, the control means (15, 19, 21) reduces the electrical power supplied and controls the extent of power reduction depending on which wheel (1, 7) is affected by the system error, the power reduction increasing in the sequence: rear inner cornering wheel (7i), front inner cornering wheel (1i) and/or rear outer cornering wheel (7a), front outer cornering wheel (1a).

20. A drive arrangement according to claim 19, characterized in that the control means (15, 19, 21) reduces the electrical power immediately.

21. A drive arrangement according to claim 19, characterized in that the control means (15, 19, 21) reduces the electrical power at a predetermined alteration speed.

22. A drive arrangement according to claim 21, characterized in that the control means (15, 19, 21) detects the travel speed of the motor vehicle by means of a sensor (65) and increases the value of the alteration speed with increasing travel speed.

23. A drive arrangement according to any one of claims 1 to 22, characterized in that associated with the control means (15, 19, 21) are steering angle detection means (59) which detect the steering angle and/or a temporal alteration in the steering angle of steered wheels (1) of the motor vehicle and in that the control means (15, 19, 21) so controls the electrical power supplied to at least one electric motor that, at the beginning of the steering process until a stationary cornering travel is reached, a yawing moment is generated which supports the initiation of the steering process.

24. A drive arrangement according to any one of claims 1 to 23, characterized in that associated with the control means (15, 19, 21) are wind yawing moment detection means (67; 63, 69) which detect a wind yawing moment caused by side wind, and in that the control means (15, 19, 21) alters the electrical power of at least one of the electric motors (9) in such a way that a yawing moment acting against the wind yawing moment arises with respect to the vertical axis of the motor vehicle, the driving torque of at least one wheel (1, 7) increasing on one side of the vehicle's longitudinal axis (37) and/or the driving torque of at least one wheel (1, 7) on the other side of the vehicle's longitudinal axis (37) being reduced in particular even to the extent of a reversing driving torque.

25. A drive arrangement according to claim 24, characterized in that the wind yawing moment detection means comprise a plurality of dynamic pressure sensors (67) arranged spacedly in the direction of the vehicle's longitudinal axis.

26. A drive arrangement according to either one of claims 24 or 25, characterized in that the wind yawing moment detection means comprise at least one transverse speed sensor and/or at least one acceleration sensor (63, 69) measuring the transverse and/or longitudinal acceleration of the motor vehicle.

**Revendications**

1. Dispositif d'entraînement pour un véhicule automobile comportant, à chaque fois, au moins une roue entrainée (1,7) des deux côtés de l'axe longitudinal (37) du véhicule, présentant un moteur à combustion interne (13), un agencement de générateur électrique (11) entraîné par le moteur à combustion interne (13), un moteur électrique (9) pour chacune des roues entraînées (1,7), et une commande électronique (15,19,21), commandant la valeur de la puissance électrique amenée aux moteurs électriques individuels (9) à partir de l'agencement de générateur (11), la commande (15,19,21) étant associée à des moyens de détection de la charge des roues (39;51;53;55), qui détectent la valeur de la charge instantanée de chacune des roues entraînées (1,7),
caractérisé en ce que la commande (15,19,21) est associée à des moyens (21,29) qui, de façon dépendant de la charge des roues, prédéfinissent ou déterminent une valeur maximale de la force motrice résultante des roues pouvant être transférée par chaque roue entraînée, et en ce que la commande (15,19,21) commande la puissance électrique amenée à chaque moteur électrique (9) de façon dépendant de la charge instantanée détectée de la roue (1,7) entraînée par le moteur électrique (9), de sorte que la force motrice résultante des roues est plus petite que la valeur maximale, la commande (15,19,21) augmentant la puissance électrique amenée aux moteurs électriques individuels (9) lorsque la charge de la roue (1,7) entraînée par le moteur électrique (9) croît et la diminuant lorsque la charge de la roue diminue.

2. Dispositif d'entraînement selon la revendication 1, caractérisé en ce que la commande (15,19,21) maintient la puissance électrique délivrée en totalité par l'agencement de générateur (11) à tous les moteurs électriques (9) à une valeur prédéfinie, et commande la répartition de la puissance électrique sur les moteurs électriques (9) de façon dépendant de la charge des roues entraînées (1,7).

3. Dispositif d'entraînement selon une des revendications 1 ou 2,
caractérisé en ce que la commande (15,19,21), lors du dépassement calculé de la valeur maximale de la force motrice d'une des roues entraînées (1,7), diminue le moment d'entraînement délivré par le moteur électrique (9) de cette roue (1,7) et augmente le moment d'entraînement du moteur électrique (9) d'au moins une autre roue (1,7).

4. Dispositif d'entraînement selon la revendication 3, caractérisé en ce que la commande (15,19,21) augmente les moments d'entraînement des moteurs électriques (9) de tous les autres moteurs électriques (9).

5. Dispositif d'entraînement selon une des revendications 1 à 4,
caractérisé en ce que les moyens de détection de la charge des roues comportent des capteurs (39;51;53) agencés sur des composants de suspension des roues (47) des roues entraînées (1,7), lesquels capteurs détectent directement, à chaque fois, une valeur représentant la charge de la roue, en particulier la force transmise par une suspension élastique de la roue 43 et/ou un amortisseur de chocs (45).

6. Dispositif d'entraînement selon une des revendications 1 à 4,
caractérisé en ce que les moyens de détection de la charge des roues comportent des capteurs (55) agencés sur des composants de suspension des roues (47) des roues entraînées (1,7), lesquels capteurs détectent, à chaque fois, une valeur dépendant de la charge des roues, en particulier la course de compression élastique dépendant de la charge des roues par ordre de grandeur et/ou modification temporelle et, de façon dépendant de cela, calculent une valeur représentant la charge des roues.

**7.** Dispositif d'entraînement selon une des revendications 1 à 6,
caractérisé en ce que la commande (15,19,21) est associée à des moyens de détection de déplacement dans un virage (59,63) qui détectent un déplacement dans un virage, et en ce que la commande (15,19,21), pendant le déplacement en virage, modifie la répartition de la puissance électrique amenée aux moteurs électriques (9) des roues (1,7) agencées sur des côtés opposés de l'axe longitudinal (37) du véhicule pour engendrer un moment de lacet influençant le comportement de direction à la marche par inertie, de sorte que le moment d'entraînement sur au moins une roue (1a,7a) augmente sur le côté extérieur du virage de l'axe longitudinal (37) du véhicule et/ou le moment d'entraînement sur au moins une roue (1i,7i) diminue sur le côté intérieur du virage de l'axe longitudinal (37) du véhicule.

**8.** Dispositif d'entraînement selon la revendication 7, caractérisé en ce que la commande (15,19,21) commande la puissance électrique des moteurs électriques (9) des roues (1,7) associées ensemble à un essieu (3,5), de sorte que le rapport du moment d'entraînement de la roue (1a,7a) extérieure au virage de l'essieu (3,5) et du moment d'entraînement de la roue (1i,7i) intérieure au virage de cet essieu (3,5) présente sensiblement une valeur prédéfinie supérieure à 1.

**9.** Dispositif d'entraînement selon la revendication 7 ou 8,
caractérisé en ce que le véhicule automobile présente au moins un essieu avant (3) et un essieu arrière (5), et en ce que la commande (15,19,21) commande la puissance électrique des moteurs électriques (9) de l'essieu avant (3) et de l'essieu arrière (5), de sorte que le rapport de la somme des moments d'entraînement de l'essieu arrière (5) et de la somme des moments d'entraînement de l'essieu avant (3) présente sensiblement une valeur prédéfinie.

**10.** Dispositif d'entraînement selon les revendications 7 à 9,
caractérisé en ce que la commande (15,19,21) commande la puissance électrique amenée aux moteurs électriques individuels (9), de sorte que la somme des moments d'entraînement des moteurs électriques (9) de toutes les roues entraînées (1,7) demeure sensiblement constante lorsque la puissance électrique des moteurs électriques (9) individuels est modifiée.

**11.** Dispositif d'entraînement selon une des revendications 7 à 10,
caractérisé en ce que la commande (15,19,21) est associée à des moyens de détection de l'accélération transversale (63;59,65), qui détectent la valeur et/ou la direction d'une accélération transversale agissant sur le véhicule automobile, et en ce que la commande (15,19,21) commande la répartition de la puissance électrique engendrée sur les moteurs électriques individuels (9) et/ou le rapport des moments d'entraînement des roues entraînées (1,7) de façon dépendant de l'accélération transversale détectée, de sorte que le rapport du moment d'entraînement d'une roue (1a,7a) extérieure au virage et du moment d'entraînement d'une roue (1i,7i) intérieure au virage du même essieu (3,5) est augmenté lorsque l'accélération transversale croît et/ou le rapport du moment d'entraînement d'une roue avant (1) et du moment d'entraînement d'une roue arrière (7) du même côté de l'axe longitudinal (37) du véhicule est augmenté lorsque l'accélération transversale croît.

**12.** Dispositif d'entraînement selon la revendication 11,
caractérisé en ce que les moyens de détection de l'accélération transversale comportent au moins un capteur d'accélération transversale (63) mesurant directement l'accélération transversale et agencé de préférence dans la zone des roues avant (1).

**13.** Dispositif d'entraînement selon la revendication 11 ou 12,
caractérisé en ce que les moyens de détection de l'accélération transversale calculent l'accélération transversale de façon dépendant de la vitesse de déplacement, détectée au moyen de capteurs (59,65), du véhicule automobile et de l'angle de direction des roues directrices (1) du véhicule automobile.

**14.** Dispositif d'entraînement selon une des revendications 7 à 13,
caractérisé en ce que la commande est associée à des moyens pour détecter l'accélération en direction longitudinale du véhicule, de préférence au moins un capteur d'accélération longitudinale (69) mesurant l'accélération longitudinale.

**15.** Dispositif d'entraînement selon une des revendications 7 à 14,
caractérisé en ce que la commande (15,19,21) réagit à une modification de la position de la pédale d'accélérateur pendant un déplacement dans un virage et commande, au moins pendant une partie de la phase d'accélération ou de décélération déterminée par la modification de la position de la pédale d'accélérateur, la répartition de la puissance électrique entre les moteurs électriques (9) de l'essieu avant (3) et les moteurs électriques (9) de l'essieu arrière (5), de façon que le rapport des moments d'entraînement appliqués par les roues (1) de l'essieu avant (3) et des moments d'entraînement appliqués par les roues (7) de l'essieu arrière (5) croît.

**16.** Dispositif d'entraînement selon la revendication 15, caractérisé en ce que la commande (15,19,21), lors d'une modification de la position de la pédale d'accélérateur vers sa position de repos, diminue le moment d'entraînement de préférence seulement de l'essieu arrière et/ou, lors d'une modification de la position de la pédale d'accélérateur vers la position de pleine charge, augmente le moment d'entraînement de préférence seulement de l'essieu avant (3).

**17.** Dispositif d'entraînement selon une des revendications 15 ou 16, caractérisé en ce que la commande (15,19,21) comporte des moyens de limitation (21) pour limiter la vitesse et/ou pour limiter dans le temps la variation du rapport de puissance résultant de la modification de la position de la pédale d'accélérateur.

**18.** Dispositif d'entraînement selon la revendication 17, caractérisé en ce que la commande (15,19,21) réagit à la vitesse de déplacement du véhicule automobile, et les moyens de limitation (21) augmentent la vitesse de variation lorsque la vitesse de déplacement croît.

**19.** Dispositif d'entraînement selon une des revendications 7 à 18, caractérisé en ce que la commande (15,19,21) est associée à des moyens de reconnaissance de panne (21), qui détectent des pannes du système des composants électriques du dispositif d'entraînement, et en ce que la commande (15,19,21) réduit la puissance électrique amenée lorsqu'il se produit une panne du système pendant le déplacement en virage pour au moins un moteur électrique (9), et la valeur de la réduction de puissance commande, de façon dépendant de cela, quelle roue (1,7) est concernée par la panne du système, la réduction de puissance croissant dans la succession suivante : roue arrière (7i) intérieure au virage, roue avant (1i) intérieure au virage et/ou roue arrière (7a) extérieure au virage, roue avant (1a) extérieure au virage.

**20.** Dispositif d'entraînement selon la revendication 19, caractérisé en ce que la commande (15,19,21) réduit immédiatement la puissance électrique.

**21.** Dispositif d'entraînement selon la revendication 19, caractérisé en ce que la commande (15,19,21) réduit la puissance électrique avec une vitesse de variation prédéfinie.

**22.** Dispositif d'entraînement selon la revendication 21, caractérisé en ce que la commande (15,19,21) détecte, au moyen d'un capteur (65), la vitesse de déplacement du véhicule automobile et augmente la valeur de la vitesse de variation lorsque la vitesse de déplacement croît.

**23.** Dispositif d'entraînement selon une des revendications 1 à 22, caractérisé en ce que la commande (15,19,21) est associée à des moyens de détection de l'angle de direction (59), qui détectent l'angle de direction et/ou une variation dans le temps de l'angle de direction de roues directrices (1) du véhicule automobile, et en ce que la commande (15,19,21) commande la puissance électrique amenée à au moins un moteur électrique (9) de sorte que, au début du processus de direction jusqu'à atteindre un déplacement en virage stationnaire, il est engendré un moment de lacet favorisant l'introduction du processus de direction.

**24.** Dispositif d'entraînement selon une des revendications 1 à 23, caractérisé en ce que la commande (15,19,21) est associée à des moyens de détection du moment de lacet de vent (67;63,69) qui détectent un moment de lacet de vent engendré par un vent latéral, et en ce que la commande (15,19,21) modifie la puissance électrique d'au moins un des moteurs électriques (9), de sorte qu'il se produit un moment de lacet s'opposant au moment de lacet de vent relativement à l'axe vertical du véhicule automobile, en ce que le moment d'entraînement d'au moins une roue (1,7) d'un côté de l'axe longitudinal (37) du véhicule automobile est augmenté et/ou le moment d'entraînement d'au moins une roue (1,7) de l'autre côté de l'axe longitudinal (37) du véhicule est diminué en particulier également jusque dans le domaine d'un moment d'entraînement qui s'inverse.

**25.** Dispositif d'entraînement selon la revendication 24, caractérisé en ce que les moyens de détection du moment de lacet de vent comportent plusieurs capteurs de pression dynamique (67) agencés de façon écartée l'un de l'autre en direction de l'axe longitudinal du véhicule.

**26.** Dispositif d'entraînement selon une des revendications 24 ou 25, caractérisé en ce que les moyens de détection du moment de lacet de vent comportent au moins un capteur de vitesse transversale et/ou au moins un capteur d'accélération (63,69) mesurant l'accélération transversale et/ou l'accélération longitudinale du véhicule automobile.

# Fig. 1

# Fig. 2

Fig. 4

Fig. 3

# Fig. 5

# Fig. 6

# Fig. 7